# EUROPÄISCHE PATENTANMELDUNG

(11) **EP 2 128 640 A2**
(43) Veröffentlichungstag der Anmeldung: **02.12.2009**
(21) Anmeldenummer: 09006641.6
(22) Anmeldetag: 16.05.2009
(51) Int. Cl.: G01S 1/00

(54) **Verfahren zum Optimieren von Statusbenachrichtigungen bei einem Satellitennavigationssystem**

(30) Priorität: 26.05.2008 DE 102008025063
(71) Anmelder: Astrium GmbH, 82024 Taufkirchen (DE)
(72) Erfinder: Trautenberg, Hans, L., Dr., 85521 Ottobrunn (DE)
(74) Vertreter: Hummel, Adam

(57) **Zusammenfassung**

Die Erfindung betrifft ein Verfahren zum Optimieren von Statusbenachrichtigungen bei einem Satellitennavigationssystem, mit den folgenden Schritten:
- Ermitteln von Information über ein Kommunikationsnetzwerk des Satellitennavigationssystems (S10), und
- Übermitteln der ermittelten Informationen als Statusbenachrichtigung mittels einer oder mehrerer Navigationsnachrichten (S12).

## Beschreibung

Die Erfindung betrifft ein Verfahren zum Optimieren von Statusbenachrichtigungen bei einem Satellitennavigationssystem gemäß Anspruch 1.

Satellitensysteme zur weltweiten Navigation (Global Navigation Satellite System GNSS, kurz Satellitennavigationssystem) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen umfasst, sowie Nutzungssysteme auf, welche die von den Satelliten per Funk übermittelten Satellitensignale insbesondere zur Navigation auswerten und nutzen. Von den Bodenstationen werden auch Statusbenachrichtigungen beispielsweise über den technischen Zustand aller Satelliten des Raumsegments und die Integrität übermittelt, die von den Nutzungssystemen empfangen und ausgewertet werden können.

Aufgrund der Topologie des Kommunikationsnetzwerks in Satellitennavigationssystemen wie Galileo können in der Regel mehrere Bodenstationen gleichzeitig ausfallen, da Kommunikationselemente von mehreren Bodenstationen gemeinsam verwendet werden. Sofern es nicht zu einem Totalausfall der Kommunikation kommt, kann sich durch den Ausfall von Kommunikationselementen allerdings die Kontinuität der Kommunikation im Satellitennavigationssystem verschlechtern. Insbesondere kann die Übermittlung von Statusbenachrichtigungen verschlechtert werden, was insbesondere für den bei Galileo vorgesehenen sicherheitskritischen Dienst (Safety of Life (SoL) Service) von Nachteil ist.

Aufgabe der vorliegenden Erfindung ist es daher, ein Verfahren zum Optimieren von Statusbenachrichtigungen bei einem Satellitennavigationssystem vorzuschlagen.

Diese Aufgabe wird durch ein Verfahren zum Optimieren von Statusbenachrichtigungen bei einem Satellitennavigationssystem mit den Merkmalen von Anspruch 1 gelöst. Weitere Ausgestaltungen der Erfindung sind Gegenstand der abhängigen Ansprüche.

Ein wesentlicher Gedanke der Erfindung besteht nun darin, die Informationen über ein Kommunikationsnetzwerk eines Satellitennavigationssystems wie beispielsweise die Topologie des Kommunikationsnetzwerks oder die erwartete Kontinuität von Kommunikationselementen des Kommunikationsnetzwerks an Nutzungssysteme zur weiteren Verarbeitung zu übermitteln. Dadurch kann ein Nutzungssystem die erwartete Kontinuität der Verfügbarkeit von Beobachtungsdaten des Satellitennavigationssystems berechnen. Dies ermöglicht die Optimierung von Statusbenachrichtigungen im Satellitennavigationssystem, da ein Nutzungssystem eine möglicherweise verschlechterte Kontinuität der Kommunikation insbesondere von Statusbenachrichtigungen durch eine Verarbeitung der erhaltenen Informationen über das Kommunikationsnetzwerk eine Genauigkeit berechnen kann, mit der Entfernungsmessungen vorgenommen werden können.

Die Erfindung betrifft nun gemäß einer Ausführungsform ein Verfahren zum Optimieren von Statusbenachrichtigungen bei einem Satellitennavigationssystem, mit den folgenden Schritten:
- Ermitteln von Information über ein Kommunikationsnetzwerk des Satellitennavigationssystems, und
- Übermitteln der ermittelten Informationen als Statusbenachrichtigung mittels einer oder mehrerer Navigationsnachrichten. Durch die Übermittlung von Information über das Kommunikationsnetzwerk kann ein Nutzungssystem eine zu erwartende Kontinuität ermitteln, und davon abhängig beispielsweise eine Warnmeldung über eine möglicherweise zu erwartende Verringerung der auf Navigationsnachrichten basierenden Entfernungsmessungen ausgeben.

Gemäß einer Ausführungsform der Erfindung kann der Schritt des Ermittelns von Informationen über ein Kommunikationsnetzwerk des Satellitennavigationssystems die folgenden Schritte umfassen:
- Ermitteln der Topologie eines Kommunikationsnetzwerks des Satellitennavigationssystems und
- Ermitteln der erwarteten Kontinuitäten von Kommunikationselementen des Kommunikationsnetzwerks. Die kann ein Nutzungssystem in die Lage versetzen, eine verhältnismäßig genaue Abschätzung einer zu erwartenden Kontinuität von Navigationsnachrichten zu ermitteln, da mit Wissen der Topologie und der erwarteten Kontinuitäten der Kommunikationselemente eine Gesamtabschätzung der Kontinuität im Satellitennavigationssystem ermöglicht wird.

Gemäß einer weiteren Ausführungsform der Erfindung kann das Übermitteln der ermittelten Informationen über ein Kommunikationsnetzwerk des Satellitennavigationssystems in Form einer sich im Vergleich zu normalen Navigationsnachrichten langsam wiederholenden Navigationsnachricht erfolgen. Dadurch wird der Kommunikationsfluss im Satellitennavigationssystem durch die Übertragung der Informationen oder das Kommunikationsnetzwerk nur wenig beeinflusst.

Das Verfahren kann gemäß einer weiteren Ausführungsform der Erfindung ferner durch den Schritt des Übermittelns des Ausfalls eines oder mehrerer Kommunikationselemente mittels einer oder mehrerer Alarmnachrichten gekennzeichnet sein. Dies ermöglicht eine schnelle Information von Nutzungssystemen über den Ausfall, so dass diese die Kontinuität neue berechnen und ggf. Anpassungen an die neu berechnete Kontinuität vornehmen können. Weiterhin können dadurch Fehler, welche die Verfügbarkeit von Messdaten mehrerer Bodenstation des Satellitennavigationssystems nun deutlich effektiver in Alarmnachrichten verbreitet werden.

Insbesondere kann gemäß einer Ausführungsform der Erfindung eine Alarmnachricht eine Kennung des ausgefallenen Kommunikationselements aufweisen, so dass den Nutzungssystemen eine möglichst genaue Berechnung der aufgrund des Ausfalls geänderten Kontinuität ermöglicht wird. Hierdurch kann die Notwendigkeit entfallen, in einer einzigen Alarmnachricht jede einzelne Beobachtungsstation als nicht verfügbar markieren zu müssen, da der zeitgleiche Ausfall von mehreren Beobachtungsstationen fast immer durch den Ausfall von Elementen der Kommunikation hervorgerufen wird.

Die Erfindung betrifft weiterhin in einer Ausführungsform ein Satellitennavigationssystem, das ein Raumsegment mit mehreren Satelliten, die Satellitensignale, die Navigationsnachrichten enthalten, zum Empfangen und Auswerten durch Nutzungssysteme für die Positionsbestimmung und Navigation aussenden, und ein Bodensegment mit mehreren Beobachtungs- und Kommandostationen, welche die Satelliten überwachen, umfasst, wobei eine oder mehrere der Beobachtungs- und Kommandostationen ausgebildet sind, ein Verfahren nach der Erfindung und wie oben beschrieben auszuführen, um die Statusbenachrichtigungen im Satellitennavigationssystem zu optimieren. In einem derartigen Satellitennavigationssystem kann zum einen ein Nutzungssystem die Leistungsfähigkeit des Beobachtungssystems für seine Zwecke deutlich besser modellieren, und zum anderen können unterschiedliche Benutzeranforderungen mit einem einzigen Datenstrom besser befriedigt werden.

Ferner sieht die Erfindung in einer Ausführungsform ein Verfahren zum Verarbeiten von einer mit einer Navigationsnachricht übertragenen Statusbenachrichtigung in einem Satellitennavigationssystem mit den folgenden Schritten:
Empfangen einer Navigationsnachricht mit der Statusbenachrichtigung, die mit einem Verfahren nach der Erfindung und wie vorstehend beschreiben erzeugt und übertragen wurde,
Ermitteln der in der Statusbenachrichtigung der empfangenden Navigationsnachricht enthaltenen Information über das Kommunikationsnetzwerk des Satellitennavigationssystems, und
Berechnen der erwarteten Kontinuität der Verfügbarkeit von Beobachtungsdaten im Satellitennavigationssystem auf Basis der ermittelten Information über das Kommunikationsnetzwerk des Satellitennavigationssystems.

Schließlich sieht die Erfindung noch in einer Ausführungsform einen Empfänger für Signale eines Satellitennavigationssystems vor, die Navigationsnachrichten enthalten, wobei der Empfänger zum Ausführen eines Verfahrens zum Verarbeiten von einer mit einer Navigationsnachricht übertragenen Statusbenachrichtigung in einem Satellitennavigationssystem nach der Erfindung und wie oben erläutert ausgebildet ist. Beispielsweise kann das Verfahren in der Betriebssoftware eines Empfängers für Navigationsnachrichten, beispielsweise eine Navigationsgerätes, implementiert sein. Dadurch kann die Funktionalität des Empfängers erweitert werden, indem der Empfänger einen Benutzer über eine mögliches Problem in der Kontinuität und die zu erwartende Kontinuität genauer als bisher informieren kann.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Satellitennavigationssystem mit einem Ausführungsbeispiel einer Vorrichtung zum Optimieren von Statusbenachrichtigungen bei einem Satellitennavigationssystem gemäß der Erfindung; und
- Fig. 2: ein Flussdiagramm eines Ausführungsbeispiels eines Verfahrens zum Optimieren von Statusbenachrichtigungen bei einem Satellitennavigationssystem gemäß der Erfindung.

Im Folgenden können gleiche und/oder funktional gleiche Elemente mit den gleichen Bezugszeichen versehen sein.

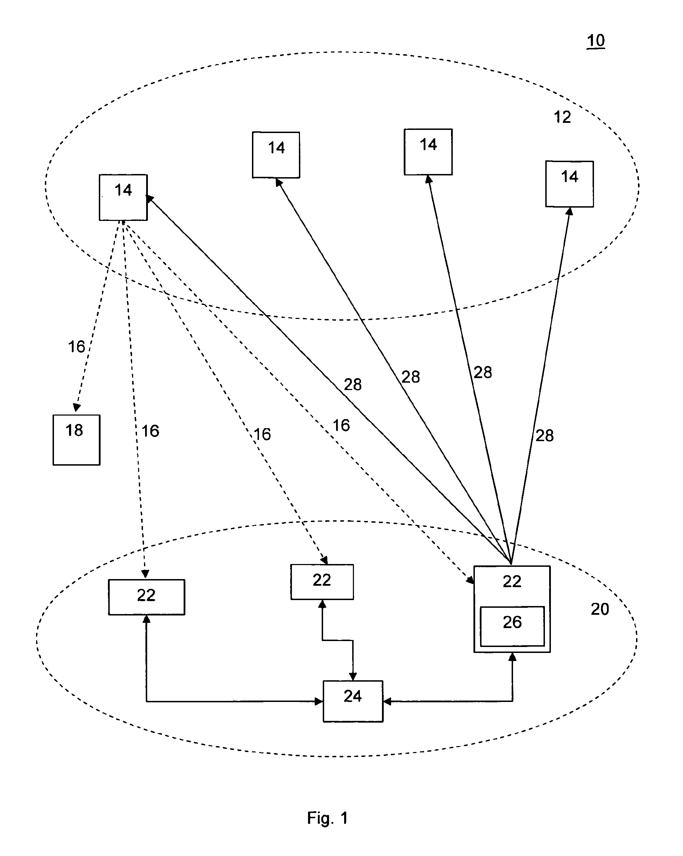

In Fig. 1 ist ein Satellitennavigationssystem 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Satellitensignale 16 aus, die von Nutzungssystemen 18 wie beispielsweise mobilen Navigationsgeräten sowie von Beobachtungs- und Kommandostationen 22 des Bodensegments 20 empfangen werden können. Die Satellitensignale 16 enthalten Navigationsnachrichten des Satellitennavigationssystems 10, die Orbitalparameter zur Orbitbeschreibung enthalten. Die Beobachtungs- und Kommandostationen 22, die bei Galileo als getrennte Einheiten ausgelegt sind, sind insbesondere zur Überwachung und Steuerung der Satelliten 14 vorgesehen. Hierzu leiten sie empfangene Navigationssignale 16 über ein Kommunikationsnetzwerk an ein Kontrollzentrum 24 (zentrale Prozessierungsstelle des Bodensegments 20) weiter, das die empfangenen Navigationssignale 16 auswertet, indem es die mit jedem Navigationssignal 16 übertragenen Daten eines Satelliten 14, insbesondere Orbit und Zeitpunkt der Signalerzeugung sowie Signalstruktur und Integrität der empfangenen Signale überprüft. Die Beobachtungs- und Kommandostationen 22 generieren ferner Navigationsnachrichten 28, welche die bereits eingangs erwähnten Statusbenachrichtigungen beispielsweise über den technischen Zustand aller Satelliten des Raumsegments und die Integrität enthalten können, und senden diese fortlaufend an die Satelliten 14 zur kontinuierlichen Weiterverteilung an die Nutzungssysteme 18. Ein Nutzungssystem 18 kann aus den mittels der Satellitensignale 18 empfangenen Navigationsnachrichten 28 dadurch Informationen über die Integrität und damit die Zuverlässigkeit der erhaltenden Navigationsrelevanten Daten erhalten.

Insbesondere für kritische Dienste wie dem eingangs erwähnte SoL-Service bei Galileo ist ein kontinuierlicher Datenstrom im Kommunikationsnetzwerk des Bodensegments 20 von Bedeutung, da er gewährleistet, dass die Nutzungssysteme 8, die den SoL-Service nutzen, möglichst schnell über Probleme im Navigationssystem 10 benachrichtigt werden. Ein Beispiel für einen SoL-Service ist die Satelliten-gestützte Navigation beim Landeanflug eines Flugzeugs. Grundsätzlich ist die Topologie des Kommunikationsnetzwerks von Galileo daher derart ausgebildet, dass auch bei einem Ausfall einzelner Kommunikationselemente wie einer oder mehrerer Beobachtungsstationen 22 ein kontinuierlicher Datenstrom aufrechterhalten wird. Allerdings kann die Kontinuität durch den Ausfall beeinträchtigt, vor allem verschlechtert werden, beispielsweise durch eine Vergrößerung der Verzögerungszeit, bis eine wichtige Nachricht bei einem Nutzungssystem eintrifft. Durch einen Ausfall kann es vorkommen, dass die Laufzeit von Nachrichten, die vom Bodensegment 20 aus über das Raumsegment 12 an die Nutzungssysteme 18 übermittelt werden, ansteigt, oder die Kontinuität der vom Bodensegment 20 ausgesandten Nachrichten schwankt.

Die vom Bodensegment 20 ausgesandten Navigationsnachrichten 28 enthalten daher Informationen über das Kommunikationsnetzwerk des Satellitennavigationssystems 10 wie die Topologie des Kommunikationsnetzwerks und die erwarteten Kontinuitäten von Kommunikationselementen des Kommunikationsnetzwerks. Diese Informationen können in einer Beobachtungs- und Kommandostation 22 in eine Navigationsnachricht 28 eingebettet werden, die im Vergleich zu normalen Navigationsnachrichten mit einer langsameren Wiederholrate über die Satellitensignale 16 an die Nutzungssysteme 18 übertragen wird. Mit dieser Information kann ein entsprechend ausgebildetes Nutzungssystem 18 die erwartete Kontinuität insbesondere der Verfügbarkeit von Beobachtungsdaten am Kontrollzentrum 24 berechnen. Sollte ein Kommunikationselement, beispielsweise ein Satellit 14 oder eine Beobachtungs- und Kommandostation 22 ausgefallen sein, kann ferner eine Alarmnachricht mit einer Navigationsnachricht 28 von einer Boden- und Kommandostation 22 ausgesandt werden. Diese Alarmnachricht kann Informationen zum ausgefallenen Element wie einer eindeutige Kennung des ausgefallenen Elements enthalten, so dass ein Nutzungssystem 18 mit Hilfe der Information zum Kommunikationsnetzwerk, insbesondere der Topologie und den erwarteten Kontinuitäten der einzelnen Kommunikationselemente, und der Information über das ausgefallene Element berechnen kann, mit welcher Kontinuität welche Beobachtungen am Kontrollzentrum 24 bereitstehen. Anhand der am Kontrollzentrum 24 bereitstehenden Informationen kann nein Nutzungssystem 18 dann weiter bestimmen, mit welcher Genauigkeit Entfernungsmesssignale beobachtet werden können. Je höher die Anforderung des Nutzungssystems 18 an die Kontinuität sind, desto schlechter wird die angenommene Genauigkeit der Beobachtung sein, da mehr Beobachtungen benötigt werden, um die Kontinuität bereit zu stellen.

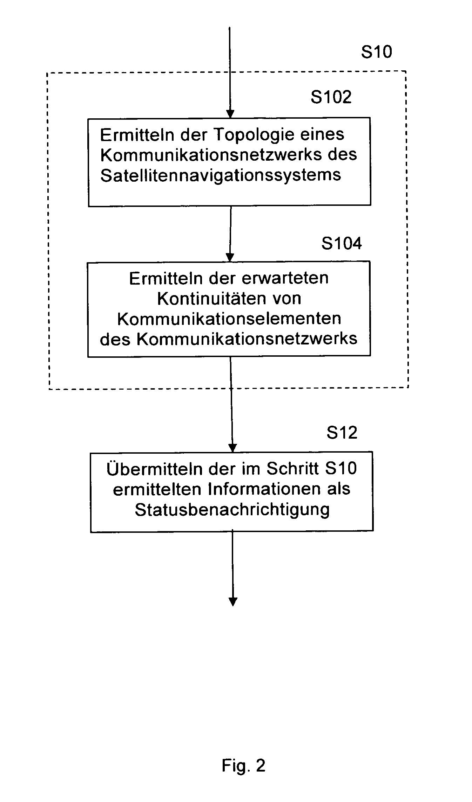

Zum Einbetten der Topologie- und erwarteten Kontinuitäts-Informationen in eine Navigationsnachrichten 28 weist eine Beobachtungs- und Kommandostation 22 entsprechende Prozessormittel 26 auf. Die Prozessormittel 26 sind zum Ausführen des in Fig. 2 anhand eines Flussdiagramms grob skizzierten Verfahrens konfiguriert, beispielsweise indem sie entsprechende Algorithmen ausführen.

Gemäß dem in Fig. 2 grob skizzierten Verfahrensablauf wird zunächst im Schritt S10 Information über ein Kommunikationsnetzwerk des Satellitennavigationssystems ermittelt. Dieser Schritt ist in zwei Unterschritte aufgeteilt: im Schritt S102 wird zunächst die der Topologie eines Kommunikationsnetzwerks des Satellitennavigationssystems ermittelt. Die Topologie kann beispielsweise im Kontrollzentrum 24 gespeichert sein und von einer Beobachtungs- und Kommandostation 22 über das Kommunikationsnetzwerk abgerufen werden. Im darauf folgenden Schritt S104 werden dann die erwarteten Kontinuitäten von Kommunikationselementen des Kommunikationsnetzwerks ermittelt. Daten zu den erwarteten Kontinuitäten der Kommunikationselemente können beispielsweise in einer Datenbank des Kontrollzentrums 24 gespeichert und von den Beobachtungs- und Kommandostationen 22 abrufbar sein. Zum Ausführen des Schritts S10 können die Prozessormittel 26 der Beobachtungs- und Kommandostation 22 beispielsweise zunächst das Abfragen der Topologie vom Kontrollzentrum initiieren und vom Kontrollzentrum 24 empfangene Daten zur Topologie zwischenspeichern, um anschließend die in den Daten zur Topologie aufgeführten Kommunikationselemente zu identifizieren und deren erartete Kontinuitäten aus der Datenbank des Kontrollzentrums 24 abfragen. Aus den so erhalten Daten können die Prozessormittel 26 anschließend eine Navigationsnachricht 28 erzeugen, die in langsamer Folge an die Satelliten 14 des Raumsegments 12 übermittelt wird. Die in der übermittelten Navigationsnachricht 28 enthaltenen Informationen zum Kommunikationsnetzwerk sind Statusbenachrichtigungen im weiteren Sinne über das Satellitennavigationssystem und im engeren Sinne über das Kommunikationsnetzwerk des Satellitennavigationssystems. Da Kontrollzentrum 24 kann ferner automatisch Änderungen der Topologie und der erwarten Kontinuitäten an die einzelnen Beobachtungs- und Kommandostationen 22 des Bodensegments 20 signalisieren, so dass diese automatisch die sich langsam wiederholende Navigationsnachricht entsprechende anpassen können.

Durch die Erfindung kann ein Nutzungssystem eines Satellitennavigationssystems die Leistungsfähigkeit eines Beobachtungssystem eines Satellitennavigationssystems für seine Zwecke besser modellieren. Weiterhin ist es möglich, unterschiedliche Anforderungen von Benutzern mit einem einzigen Datenstrom befriedigen zu können, da die Nutzungssysteme anhand der übermittelten Informationen zum Kommunikationsnetzwerk eigene Berechnungen zur zu erwarteten Kontinuität durchführen können. Weiterhin können Fehler, welche die Verfügbarkeit von Messdaten von mehreren Bodenstationen, insbesondere Beobachtungs- und Kommandostationen betreffen, wesentlich effektiver in Alarmnachrichten verbreitet werden. Schließlich kann die Notwendigkeit entfallen, in einer einzelnen Alramnachricht jede einzelne Beobachtungs- und Kommandostation als nicht verfügbar markieren zu müssen, da der zeitgleiche Ausfall von mehreren Beobachtungsstationen fast immer durch den Ausfall von Elementen der Kommunikation im Satellitennavigationssystem hervorgerufen wird.

### Bezugszeichen

- 10: Satellitennavigationssystem
- 12: Raumsegment
- 14: Satelliten
- 16: Satellitensignale
- 18: Nutzungssysteme
- 20: Bodensegment
- 22: Beobachtungs- und Kommandostationen
- 24: Kontrollzentrum
- 26: Prozessormittel für Navigationsnachrichten 28
- 28: Navigationsnachricht einer Beobachtungs- und Kommandostation 22
- S10-S12: Verfahrensschritte

## Patentansprüche

1. Verfahren zum Optimieren von Statusbenachrichtigungen bei einem Satellitennavigationssystem, mit den folgenden Schritten:
- Ermitteln von Information über ein Kommunikationsnetzwerk des Satellitennavigationssystems (S10), und
- Übermitteln der ermittelten Informationen als Statusbenachrichtigung mittels einer oder mehrerer Navigationsnachrichten (S12).

2. Verfahren nach Anspruch 1,
**dadurch gekennzeichnet, dass**
der Schritt des Ermittelns von Informationen über ein Kommunikationsnetzwerk des Satellitennavigationssystems (S10) die folgenden Schritte umfasst:
- Ermitteln der Topologie eines Kommunikationsnetzwerks des Satellitennavigationssystems (S102) und
- Ermitteln der erwarteten Kontinuitäten von Kommunikationselementen des Kommunikationsnetzwerks (S104).

3. Verfahren nach Anspruch 1 oder 2,
**dadurch gekennzeichnet, dass**
das Übermitteln der ermittelten Informationen über ein Kommunikationsnetzwerk des Satellitennavigationssystems in Form einer sich im Vergleich zu normalen Navigationsnachrichten langsam wiederholenden Navigationsnachricht erfolgt.

4. Verfahren nach Anspruch 1, 2 oder 3,
ferner **gekennzeichnet durch** den Schritt des Übermittelns des Ausfalls eines oder mehrerer Kommunikationselemente mittels einer oder mehrerer Alarmnachrichten (S14).

5. Verfahren nach Anspruch 4,
**dadurch gekennzeichnet, dass**
eine Alarmnachricht eine Kennung des ausgefallenen Kommunikationselements aufweist.

6. Satellitennavigationssystem (10), das ein Raumsegment (12) mit mehreren Satelliten (14), die Satellitensignale (16), die Navigationsnachrichten enthalten, zum Empfangen und Auswerten durch Nutzungssysteme (18) für die Positionsbestimmung und Navigation aussenden, und ein Bodensegment (20) mit mehreren Beobachtungs- und Kommandostationen (22), welche die Satelliten (14) überwachen, umfasst, wobei eine oder mehrere der Beobachtungs- und Kommandostationen (22) ausgebildet sind, ein Verfahren nach einem der vorhergehenden 1 bis 5 auszuführen, um die Statusbenachrichtigungen im Satellitennavigationssystem (10) zu optimieren.

7. Verfahren zum Verarbeiten von einer mit einer Navigationsnachricht übertragenen Statusbenachrichtigung in einem Satellitennavigationssystem mit den folgenden Schritten:
Empfangen einer Navigationsnachricht mit der Statusbenachrichtigung, die mit einem Verfahren nach einem der Ansprüche 1 bis 5 erzeugt und übertragen wurde,
Ermitteln der in der Statusbenachrichtigung der empfangenden Navigationsnachricht enthaltenen Information über das Kommunikationsnetzwerk des Satellitennavigationssystems, und
Berechnen der erwarteten Kontinuität der Verfügbarkeit von Beobachtungsdaten im Satellitennavigationssystem auf Basis der ermittelten Information über das Kommunikationsnetzwerk des Satellitennavigationssystems.

8. Empfänger (18) für Signale (16) eines Satellitennavigationssystems (10), die Navigationsnachrichten (28) enthalten, wobei der Empfänger zum Ausführen eines Verfahrens nach Anspruch 7 ausgebildet ist.
